# EUROPÄISCHE PATENTSCHRIFT

(11) **EP 1 875 164 B1**
(45) Veröffentlichungstag und Bekanntmachung des Hinweises auf die Patenterteilung: **08.10.2008**
(21) Anmeldenummer: 06792451.4
(22) Anmeldetag: 11.04.2006
(51) Int. Cl.: G01B 11/275, G01B 11/245

(54) **VERFAHREN ZUM BESTIMMEN DER RAD- UND/ODER ACHSGEOMETRIE VON KRAFTFAHRZEUGEN**
METHOD FOR THE DETERMINATION OF THE WHEEL GEOMETRY AND/OR AXLE GEOMETRY OF MOTOR VEHICLES
PROCEDE DE DETERMINATION DE LA GEOMETRIE DES ROUES ET/OU DES ESSIEUX DE VEHICULES A MOTEUR

(30) Priorität: 15.04.2005 DE 102005017624
(43) Veröffentlichungstag der Anmeldung: 09.01.2008
(73) Patentinhaber: ROBERT BOSCH GMBH, 70442 Stuttgart (DE)
(72) Erfinder: UFFENKAMP, Volker, 71638 Ludwigsburg (DE); NOBIS, Guenter, 72622 Nuertingen (DE)
(86) Internationale Anmeldenummer: PCT/EP2006/061521
(87) Internationale Veröffentlichungsnummer: WO 2006/133982

(56) Entgegenhaltungen:
- EP-A- 0 895 056
- MECKE R ET AL: "3-D motion and shape from multiple image sequences" 3-D DIGITAL IMAGING AND MODELING, 2003. 3DIM 2003. PROCEEDINGS. FOURTH INTERNATIONAL CONFERENCE ON 6-10 OCT. 2003, PISCATAWAY, NJ, USA,IEEE, 6. Oktober 2003 (2003-10-06), Seiten 155-162, XP010662690 ISBN: 0-7695-1991-1

## Beschreibung

Die Erfindung bezieht sich auf ein Verfahren zum Bestimmen der Rad und/oder Achsgeometrie von Kraftfahrzeugen mittels einer optischen Messeinrichtung, bei dem - gegebenenfalls unter Berücksichtigung von Bezugsmerkmalen und Karosseriemerkmalen - mit einer Bildaufnahmeanord nung, die mindestens zwei Bildaufnahmeeinrichtungen zum Erzeugen digitaler Bilder umfasst, eine gegenseitige Zuordnung von mindestens zwei Aufnahmestandorten und Referenzierung zum Messraum vorgenommen sowie aus unterschiedlichen Perspektiven ein Objektausschnitt mit dem zu vermessenden Rad erfasst wird und bei der Messung die Lage von Radmerkmalen im dreidimensionalen Messraum ausgewertet wird.

### Stand der Technik

Ein derartiges Verfahren ist in der DE 197 57 763 A1 und auch in der EP 1 042 643 B1 angegeben. Bei diesen bekannten Verfahren werden mit Hilfe von Bildaufnahmeeinrichtungen, insbesondere Kameras, einer Bezugsmerlanalsanordnung am Prüfplatz und optischen Merkmalen am Fahrzeugrad und an der Karosserie die Fahrachse und weiterhin Rad und Achsgeometriedaten ermittelt. Gemäß der DE 197 57 763 A1 erfolgt dabei die Messung im Stand des Fahrzeugs, während nach der EP 1 042 643 B1 das Fahrzeug an der Messeinrichtung mit der Bildaufnahmeanordnung vorbeifährt. Aus einer Erfassung des Fahrzeugs und der Bezugsmerkmalsanordnung wird mittels der Messeinrichtung eine Referenzierung des Systems im Messraum zum Messplatz vorgenommen. Zur Durchführung der Verfahren ist im Einzelnen die Verwendung speziell angebrachter Merkmale bei der Bezugsmerkmalsanordnung (zur Referenzierung der Messeinrichtung), an dem zu vermessenden Rad bzw. den Rädern und an der Karosserie ausgeführt und auch auf die Nutzung ohnehin vorhandener Merkmale hingewiesen. Eine Adaption spezieller Merkmale am Rad bzw. der Karosserie und in der Bezugsmerkmalsanordnung erfordert zusätzlichen Aufwand, ist aber hinsichtlich einer eindeutigen Erfassung der Merkmale und damit verbundenen hohen Messgenauigkeit von Vorteil. Das Verfahren wird allerdings dadurch begünstigt, dass diese bekannte Messeinrichtung insbesondere an Karosserie und Rad die Anbringung von Merkmalen zulässt, die weder justiert werden müssen noch hohes Gewicht aufweisen.

Die hochgenaue Bestimmung der Rad- und Achsgeometrie von Fahrzeugen gewinnt durch die zunehmend technisch verbesserten Fahrwerke immer mehr an Bedeutung. Neue und feiner abgestimmte Möglichkeiten zur Einstellung von Spur und Sturz der Einzelräder verlangen eine erhöhte Genauigkeit der Messeinrichtung. Weit verbreitet sind Messeinrichtungen, die gegenüber den vorstehend genannten Verfahren eine aufwändige Montage und Justage der Messeinrichtung am Rad erfordern.

Auf der Basis der vorstehend genannten Druckschriften sind noch weitere Verfahren entwickelt worden, wie sie beispielsweise die DE 199 34 864 A1 und die DE 100 50 653 A1 zeigen. Während erstere u.a. eine besondere Vorgehensweise zum Bestimmen der Fahrachse des Fahrzeugs aus einer Bewegungsbahn mindestens eines Karosseriemerkmals vorstellt, sind in der DE 100 50 653 A1 nähere Erläuterungen zu verschiedenen Vorgehensweisen bei der Referenzierung der Messeinrichtung zum Messplatz und der gegenseitigen Zuordnung der Aufnahmestandorte (Position und Richtung, auch Orientierung genannt) gemacht.

Auch in der EP 0 895 056 A2 ist auf die Nutzung ohnehin am Fahrzeugrad vorhandener Strukturen, nämlich insbesondere des Felgenrandes zur Achsvermessung eingegangen. Zum Bestimmen der 3D-Position und Lage der Radebene wird die Lage der Felgenrandebene aus den beiden Bildern zweier Kameras hergeleitet, indem der Felgenrand zunächst in jedem Einzelbild von Bildpaaren auf der Grundlage einer Verarbeitung maximaler Grauwertsprünge mehrere signifikante Merkmale für den Felgenrand identifiziert werden und daraus die Ellipse durch fünf Punkte des abgebildeten Felgenrandes berechnet wird. Eine derartige, an sich aus der Bildverarbeitung bekannte Vorgehensweise mit der Ermittlung von Kanten aufgrund sprungartiger Grauwertübergänge macht es schwierig, eine genaue Messung der Geometriedaten zu erhalten, wobei es auch Probleme bereitet, Störeinflüsse durch sich ändernde Beleuchtungssituationen zu vermeiden.

Der Erfindung liegt die Aufgabe zugrunde, ein Verfahren der eingangs genannten Art bereitzustellen, mit dem bei möglichst geringem Justageaufwand und ohne zusätzlichen Adaptionsaufwand für Messmarken genaue Messergebnisse der Rad- und/oder Achsgeometrie erhalten werden.

### Vorteile der Erfindung

Diese Aufgabe wird mit den Merkmalen des Anspruches 1 gelöst. Hierbei ist vorgesehen, dass die Radmerkmale und/oder Bezugsmerkmale und/oder Karosseriemerkmale mit Methoden der Bildverarbeitung mittels Bildkorrelation im dreidimensionalen (3D) Objektraum gewonnen werden, wobei eine 3D-Punktwolke ermittelt wird, die die dreidimensionale Oberfläche aus dem mit den mindestens zwei Bildaufnahmeeinrichtungen aus den unterschiedlichen Perspektiven zweidimensional erfassten Objektausschnitt wiedergibt. Dabei ist die im kennzeichnenden Teil des Anspruchs 1 angegebene Gewinnung der Merkmale als Punkt, 2D-Funktion, 3D-Funktion oder 3D-Fläche einzeln oder in Kombination aus mindestens zweien dieser Maßnahmen möglich.

Hierbei wird zwar in Kauf genommen, dass ein einzelner ermittelter 3D-Oberflächenpunkt aus der Punktwolke in der Regel an sich eine weniger zuverlässige Erfassung ergibt als ein speziell für die Messung aufgebrachtes Merkmal; jedoch kann ohne zusätzliche Adaptionsmaßnahmen eine hohe Anzahl von 3D-Oberflächenpunkten durch entsprechende Algorithmen gewonnen und für die Auswertung genutzt werden, deren geringere Einzelgenauigkeit durch eine Art Mittelung oder eine geeignete Ausgleichsfunktion oder ein geeignetes Oberflächenmodell kompensiert werden kann, insbesondere wenn leistungsfähige Rechner und beispielsweise integrierte Prozessoren zur Bildbearbeitung eingesetzt werden. Dabei ergeben sich ein einfacher Aufbau und eine einfache Bedienung der Messeinrichtung, weil u.a. keine Einschränkung bezüglich Material der Karosserie, wie Blech, Aluminium oder Plastik, kein Entfernen von Radkappen und kein zusätzlicher Arbeitsaufwand zur Adaption bestehen. Sind die Radmerkmale gewonnen, kann damit mit der Auswerteeinrichtung die Rad- und/oder Achsgeometrie bestimmt werden, beispielsweise wie diesbezüglich in den eingangs erwähnten Druckschriften näher angegeben. Das Radmerkmal kann dabei bestehen entweder aus einem einzelnen 3D-Oberflächenpunkt oder einer Mittelung mehrerer lokal zusammengehöriger 3D-Oberflächenpunkte oder durch eine ausgleichende Funktion über mehrere lokal zusammengehörende 3D-Oberflächenpunkte erhaltenen Funktionsparametern (z.B. Maximalwert oder Sehne o.ä.) oder aus dem Oberflächenmodell aus lokal zusammengehörigen 3D-Oberflächenpunkten erhaltenen Funktionsparametern. Die Radmerkmale ergeben sich dabei aus einer Analyse von 3D-Oberflächenpunkten bezogen auf einen lokalisierten Bezugspunkt, als Schnittlinie durch einen Bezugspunkt oder als lokaler Flächenbereich um einen Bezugspunkt. Die Bezugspunkte werden bei der Auswertung zugrunde gelegt Die Bezugspunkte können im Hinblick auf die jeweilige Messanforderung und Auswerte-Charakteristik für die Radmerkmale (Punkt, 2D-Funktion, 3D-Funktion/-Fläche) bezüglich Anzahl und Lage optimiert vorgegeben werden, z.B. abhängig vom Fahrzeug oder Radtyp.

Für die Durchführung des Verfahrens bestehen verschiedene vorteilhafte Vorgehensweisen darin, dass entweder die Informationen der 3D-Punktwolke unmittelbar zur Extraktion der Radmerkmale verwendet werden, oder über einen Zwischenschritt aus der 3D-Punktwolke zuerst ein Oberflächenmodell abgeleitet und in einem nachfolgenden zweiten Schritt dann aus dem Oberflächenmodell die Radmerkmale extrahiert werden. Dabei kann das Oberflächenmodell z.B. als Höhenlinienmodell oder als regelmäßiges Gitternetz oder als Dreiecksvermaschung ausgeführt werden.

Wie ebenfalls aus den eingangs genannten Druckschriften hervorgeht, ist bei der Bestimmung der Rad- und/oder Achsgeometrie auch die Erfassung von Karosseriemerkmalen von Vorteil. In dieser Hinsicht ergibt sich eine Vereinfachung des Verfahrens dadurch, dass zusätzlich zu den Radmerkmalen in entsprechender Weise mit den Methoden der Bildverarbeitung mittels Bildkorrelation mindestens ein markantes Karosseriemerkmal gewonnen wird. Auch hierbei kann die Genauigkeit durch eine entsprechende Anzahl von Merkmalen erhöht werden, wie vorstehend im Zusammenhang mit Anspruch 1 erläutert.

Insbesondere im Zusammenhang mit der Bestimmung der Rad und/oder Achsgeometrie in Vorbeifahrt des Fahrzeuges an den Bildaufnahmeeinrichtungen bestehen weitere vorteilhafte Maßnahmen darin, dass das zur Bestimmung der Fahrachse aus der Bewegung des Fahrzeuges relativ zu den Bildaufnahmeeinrichtungen herangezogene mindestens eine Karosseriemerkmal und ebenso die Radmerkmale des zu vermessenden Rades aus der 3D-Oberflächenstruktur der erfassten Bildausschnitte extrahiert werden. Im Einzelnen ist hierbei vorgesehen, dass die Bestimmung der Radund/oder Achsgeometrie in der Vorbeifahrt des Fahrzeuges an den Bildaufnahmeeinrichtungen erfolgt, wobei die Bewegung des Fahrzeuges relativ zu den Bildaufnahmeeinrichtungen und zu den Bezugsmerkmalen auf der Grundlage des mindestens einen Karosseriemerkmals bestimmt wird, und dass mindestens ein Radmerkmal des zu vermessenden Rades aus der Oberflächenstruktur des erfassten Objektausschnittes zu mehreren oder allen Bildaufnahmezeitpunkten in der Vorbeifahrt extrahiert wird.

Ferner ist für die Genauigkeit und Zuverlässigkeit der Messung von Bedeutung, dass das zu vermessende Rad anhand des "Felgenschlages" mindestens dreier Radmerkmale, von denen mindestens eines signifikant ist, in der Auswerteeinrichtung auf einen Felgenschlag überprüft und dieser gegebenenfalls bei der weiteren Auswertung berücksichtigt wird. Die Gewinnung dieser signifikanten Radmerkmale erfolgt mit dem bereits beschriebenen Verfahren zur Extraktion von Radmerkmalen. Aus dem signifikanten Radmerkmal (z.B. Ventil) kann die Winkellage der mindestens zwei anderen Radmerkmale zu jedem Zeitpunkt der Messung bestimmt werden. Die Winkellage bezieht sich hierbei genau genommen auf den Bezugspunkt des betreffenden Radmerkmals.

Zu einer einfachen Bedienung und ungehinderten Messung tragen des Weiteren die Maßnahmen bei, dass die gegenseitige Zuordnung der Aufnahmestandorte und die Referenzierung der Bildaufnahmeeinrichtungen zum Messraum auf der Grundlage einer in den Messraum eingebrachten zusätzlichen Bezugsmerkmalsanordnung und/oder auf der Grundlage von Bezugsmerkmalen erfolgt, die aus in dem Messraum ohnehin vorhandenen markanten Strukturen mit der in Anspruch 1 genannten Methode der Bildverarbeitung gewonnen werden.

Der Vorgang der Referenzierung kann zeitlich vor der eigentlichen Messung am Fahrzeug und auch während der Messung erfolgen, wobei sich infolge der optischen Abdeckung durch das Fahrzeug gewisse Einschränkungen hinsichtlich Sichtbarkeit der Bezugsmerkmale ergeben können. Trotz der eingeschränkten Sichtbarkeit während der Messung am Fahrzeug kann mit den dann noch sichtbaren Bezugsmerkmalen eine Kontrolle der Referenzierung während des Messvorganges durchgeführt werden.

Eine weitere Möglichkeit zur Durchführung des Verfahrens und Gewinnung von Merkmalen unter erschwerten Licht- bzw. Beleuchtungsbedingungen (z.B. unzureichender Kontrast oder störende Reflexionen) besteht darin, dass zum Gewinnen der Radmerkmale und/oder des mindestens einen Karosseriemerkmals und/oder der Bezugsmerkmale Muster auf das Rad, die Karosserie und/oder in den Messraum mittels mindestens eines Projektors projiziert werden. Dabei werden bei den Projektoren solche mit definierten Mustern (z.B. Kreise oder Kreuze) oder zufälligen Mustern (Grauwertmuster mit stochastischer Verteilung) unterschieden, sowie Projektoren mit und ohne definiertter Zuordnung zu der bzw. den Kameras. Mit diesen Maßnahmen werden die Erfassung kontrastarmer Oberflächen und/oder die Kontrastverhältnisse bei ungünstiger Beleuchtung verbessert.

Eine vereinfachte Auswertung mit reduzierter Datenmenge wird dadurch erreicht, dass eine Reduzierung der bei der Auswertung berücksichtigten Daten dadurch vorgenommen wird, dass die Bildpunkte nicht interessierender, aufgenommener Bildbereiche entweder vor der Ermittlung der 3D-Punktwolke aus den 2D-Bildpunkten oder nach der Ermittlung der 3D-Punktwolke aus den 3D-Bildpunkten ausgenommen werden.

Weitere vorteilhafte Maßnahmen bestehen darin, dass in der 3D-Punktwolke und/oder im dreidimensionalen Oberflächenmodell vor der Extraktion der Rad und/oder Karosseriemerkmale eine partiell unterschiedliche Dichte und/oder ein partiell unterschiedliches Raster erzeugt wird, und darin, dass der Bildverarbeitungseinrichtung Vorinformationen zum zu vermessenden Rad, wie z.B. Reifendurchmesser und/oder Felgendurchmesser und/oder Lage des Ventils zugeführt werden.

### Zeichnungen

Die Erfindung wird nachfolgend anhand von Ausführungsbeispielen unter Bezugnahme auf die Zeichnungen näher erläutert. Es zeigen:
- Fig. 1: eine Anordnung zum Bestimmen der Rad und Achsgeometrie aus einer Sicht in Fahrzeuglängsrichtung,
- Fig. 2: eine Anordnung entsprechend Fig. 1 in seitlicher Ansicht,
- Fig. 3: einen größeren Ausschnitt mit einer Anordnung gemäß den Fig. 1 und 2 in Drauf sicht,
- Fig. 4: in schematischer Darstellung im Teilbild a) die Bestimmung einer Mustermatrix A in einem ersten digitalen Bild und im Teilbild b) deren Positionierung in einem zweiten digitalen Bild an verschiedenen Positionen (1, 1) bzw. (n, m),
- Fig. 5: ein Beispiel für ein 3D-Oberflächenmodell mit regelmäßigem Gitternetz,
- Fig. 6A bis 6B: Flussdiagramme zu verschieden ausgestalteten Verfahrensabläufen am Beispiel der Bestimmung eines Radstellungswinkels und
- Fig. 7A bis 7F: Darstellungen zur Gewinnung von Radmerkmalen mittels Bestimmung einer 3D-Punktwolke und zur Ermittlung einer Radebene bzw. einer Raddrehachse.

### Ausführungsbeispiel

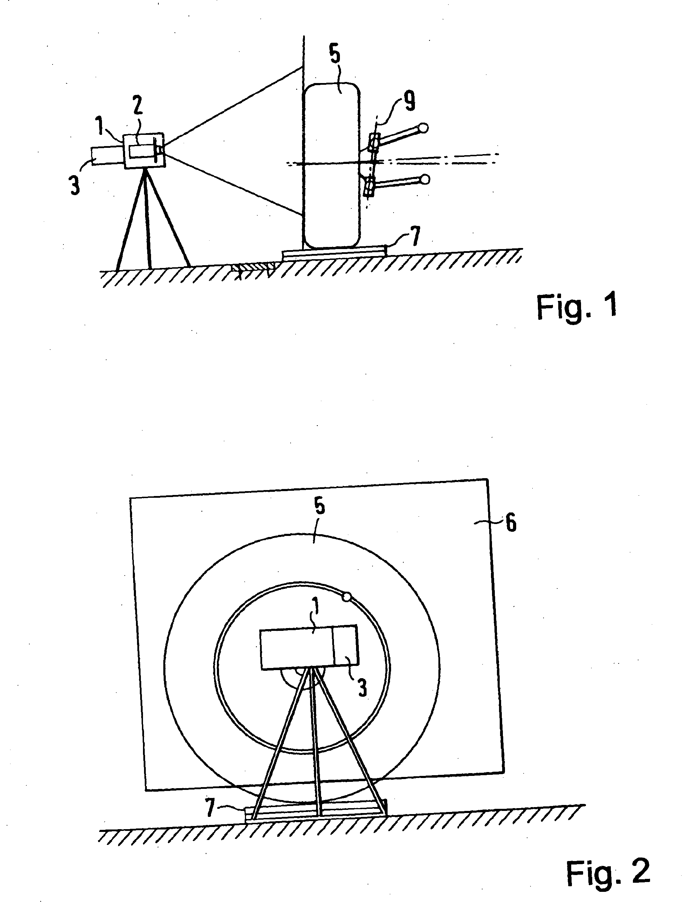

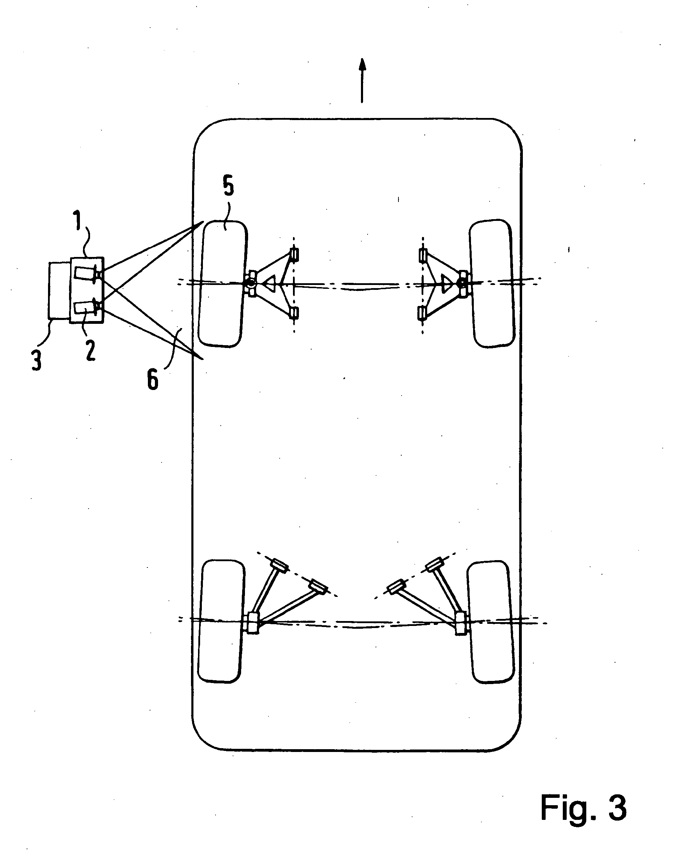

Fig. 1 zeigt eine Anordnung zum Bestimmen der Rad- und/oder Achsgeometrie von Kraftfahrzeugen aus einer Ansicht in Fahrzeuglängsrichtung mit einem beispielhaft auf einem Stativ aufgenommenen Messkopf 1, der beispielsweise zwei Bildaufnahmeeinrichtungen 2 in Form von Kameras (vgl. auch Fig. 3) und eine Auswerteeinrichtung 3 aufweist. Das Blickfeld der Kameras ist auf einen das Fahrzeugrad 5 zumindest teilweise umfassenden Objektausschnitt 6 gerichtet, wobei sich die Blickfelder beider Kameras zumindest weitgehend überdecken. Das mit einer Lenkdrehachse 9 gekoppelte Fahrzeugrad 5 steht vorliegend auf einer auf dem Messplatz angeordneten Drehplatte 7. Fig. 2 zeigt die entsprechende Anordnung in seitlicher Ansicht. Wie insbesondere aus Fig. 3 ersichtlich, wird der Objektausschnitt 6 von den beiden Kameras 2 aus unterschiedlicher Perspektive aufgenommen.

Zur Messung der dreidimensionalen Objektgeometrien, hier also in dem Objektausschnitt 6 mit dem zu vermessenden Fahrzeugrad 5 und umgebender Bereiche des Fahrzeugs, aus unterschiedlicher Perspektive muss die gegenseitige Zuordnung der Aufnahmestandorte der Bildaufnahmeeinrichtungen bzw. Kameras 2 hinsichtlich Position und Richtung (auch Orientierung genannt) bekannt sein. Bei einer Messeinrichtung mit zwei oder mehr einander fest zugeordneten Bildaufnahmeeinrichtungen 2 kann die gegenseitige Zuordnung beispielsweise werkseitig ermittelt werden oder aber am Prüfplatz (Messplatz) durch Erfassung einer Bezugsmerlanalsanordnung.

Eine weitere Aufgabe der Bezugsmerkmalsanordnung ist die Referenzierung, d.h. die Herstellung des eindeutigen Bezugs der Messeinrichtung zum Prüfplatz, um z.B. die Aufstandebene bzw. Fahrebene des Fahrzeugs und/oder eine dazu senkrechte Ebene eindeutig anzugeben und diesbezüglich die Rad- und/oder Achsgeometrie zu bestimmen, wie auch in den eingangs genannten Druckschriften erläutert.

Die gegenseitige Zuordnung der Aufnahmestandorte der Bildaufnahmeeinrichtungen 2 und die Referenzierung der Messeinrichtung zum Prüfplatz können unabhängig von der eigentlichen Fahrzeugvermessung erfolgen, also auch vorab durchgeführt werden. Ist für die Referenzierung auf dem Prüfplatz bzw. in dem Messraum eigens eine Bezugsmerkmalsanordnung installiert worden, kann diese nach der gegenseitigen Zuordnung der Aufnahmestandorte und Referenzierung vom Prüfplatz entfernt werden. Dadurch wird die Erfassung der Rad und Achsgeometrie begünstigt, weil während der eigentlichen Messung keine Verdeckungen des Fahrzeugs auftreten können und die Messeinrichtung optimiert werden kann bezüglich Objektausschnitt, Tiefenschärfe und Abbildungsmaßstab. Außerdem beschränkt sich die Erfassung und Auswertung in dieser Phase der Messung nur noch auf die Merkmale am Fahrzeug.

Ist im Aufnahmebereich der Messeinrichtung eine entsprechend strukturierte Umgebung vorbanden, kann auf das Anbringen und Entfernen einer eigens installierten Bezugsmerlanalsanordnung teilweise oder sogar gänzlich verzichtet werden, indem die Oberflächengeometrie der Messumgebung mit den Bildaufnahmeeinrichtungen 2 der Bildaufnahmeanordnung erfasst und vorteilhaft mit der Methode der Bildkorrelation die Oberflächengeometrie festgestellt und daraus charakteristische Bezugsmerkmale gewonnen werden, um damit die Zuordnung und/oder Referenzierung der Messeinrichtung durchzuführen.

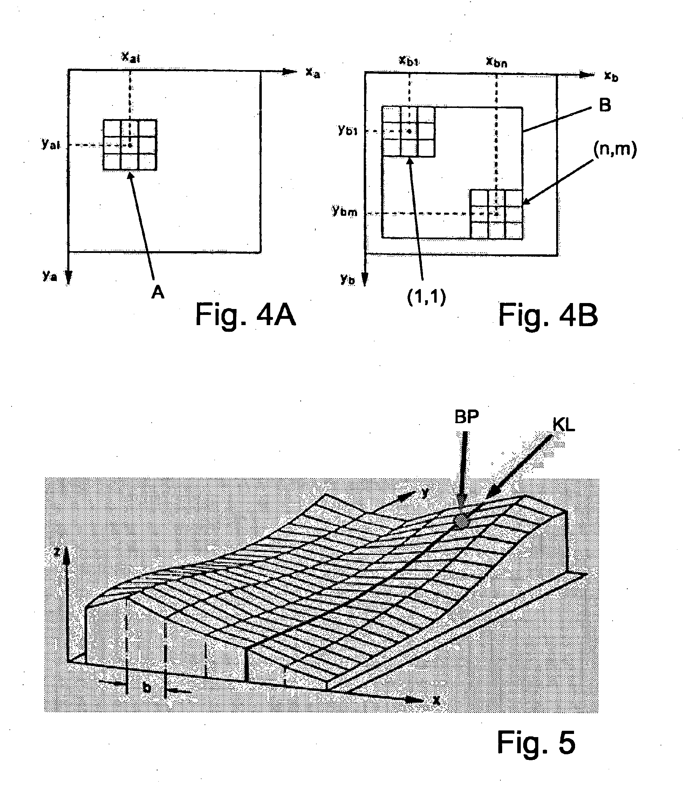

Die Bestimmung dreidimensionaler Oberflächengeometrien anhand identischer Punkte in den getrennt aufgenommenen zweidimensionalen digitalen Bildern ist aus der Photogrammetrie als Bildkorrelation an sich bekannt. Gemäß Fig. 4 wird bei der Durchführung der Bildkorrelation im ersten zweidimensionalen digitalen Bild (Teilbild a)) eine Mustermatrix A und im zweiten zweidimensionalen digitalen Bild (Teilbild b)) eine (in der Regel größere) Suchmatrix B definiert. Dann werden für alle möglichen Positionen (n, m) der Mustermatrix innerhalb der Suchmatrix die Korrelationskoeffizienten (r) bestimmt. Der Maximalwert des Korrelationskoeffizienten ergibt die wahrscheinlichste Lage der Mustermatrix A an betreffender Stelle der Suchmatrix B. Aus der so ermittelten Position der Mustermatrix in beiden Einzelbildern wird mit an sich bekannten Verfahren der Photogrammetrie ein 3D-Oberflächenpunkt ermittelt. Die Summe aller so gewonnenen 3D-Oberflächenpunkte wird als 3D-Punktwolke bezeichnet.

Aus dieser 3D-Punktwolke kann zusätzlich mit den bereits beispielhaft genannten Möglichkeiten ein dreidimensionales Oberflächenmodell mit einem vorgegebenen oder vorgebbaren Raster b abgeleitet werden, wie beispielhaft in Fig. 5 dargestellt, wobei x, y, z die Raumkoordinaten bezeichnen. Eine 2D-Ausgleichsfunktion ist darin als fette Konturlinie KL eingetragen, auch ist ein Bezugspunkt BP für ein Radmerkmal angegeben.

Je nach gewünschter oder erforderlicher Präzision kann die Gewinnung der Merkmale mit einem mehr oder weniger großen Rechenaufwand betrieben werden, wobei z.B. partiell begrenzt mit einer höheren Dichte der 3D-Punktwolke und/oder partiell begrenzt mit einem kleineren Raster des Oberflächenmodells auch feine Oberflächenstrukturen genau erfasst werden können. Umgekehrt kann man in Teilen des Objektausschnittes, die für die Gewinnung von Radmerkmalen, Bezugsmerkmalen und/oder Karosseriemerkmalen unwichtig sind, partiell eine geringe Dichte der 3D-Punktwolke und/oder ein grobes Raster des Oberflächenmodells verwenden.

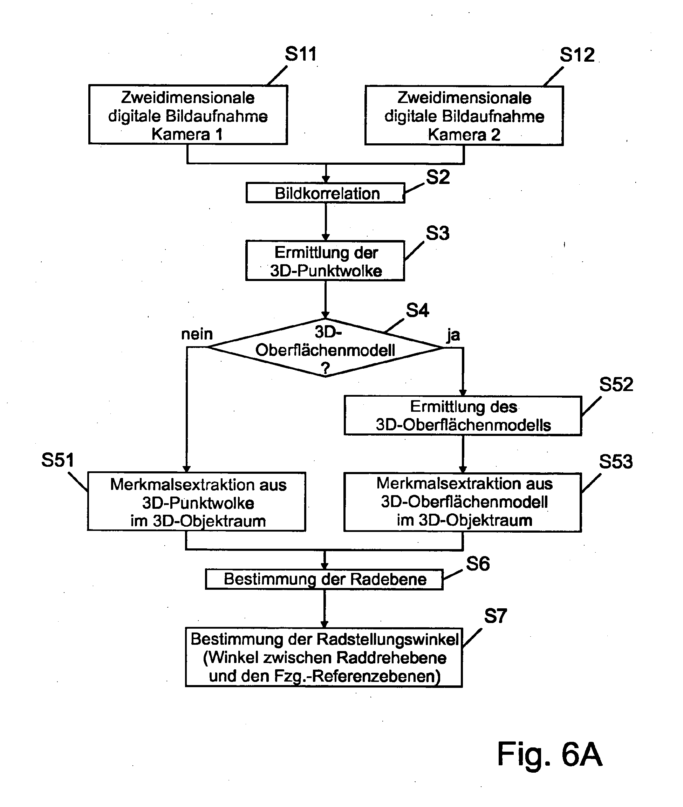

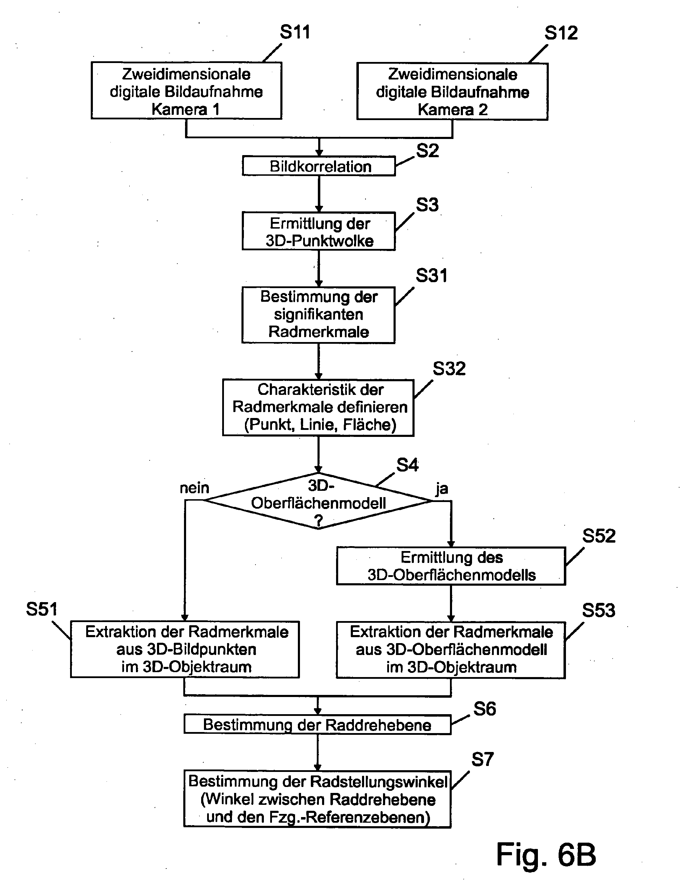

Die Fig. 6A bis 6D stellen den Prozess der Bildverarbeitung bzw. Merkmals-extraktion bis zur Bestimmung der Radstellungswinkel in Form eines Flussdiagramms dar, wobei in den Fig. 6B bis 6D verschiedene Ausgestaltungen des Prozesses gezeigt sind. Daran kann man klar erkennen, dass die Methode der Bildkorrelation hinsichtlich des Auswerteverfahrens einen wesentlichen Unterschied zu den in der Bildverarbeitung ebenfalls bekannten Methoden der Gewinnung von Konturlinien oder Kanten anhand sprunghafter Grauwertübergänge in einzeln aufgenommenen zweidimensionalen Bildern darstellt.

Nach der beschriebenen Methode der Bildkorrelation fmdet die Extraktion der relevanten Merkmale nicht im zweidimensionalen Bild (wie z.B. in EP 0 895 056 beschrieben) sondern im dreidimensionalen Objektraum statt. Damit ergeben sich u.a. deutliche Vorteile in Form geringerer Störbeeinflussung durch sich ändernde Beleuchtungs- bzw. Lichtverhältnisse und hinsichtlich der erreichbaren Genauigkeit unter normalen Werkstattbedingungen.

Gemäß Fig. 6A wird in einem ersten Schritt S11 bzw. S12 mit der ersten bzw. zweiten Kamera das erste und zweite zweidimensionale digitale Bild aufgenommen. In einem Schritt S2 wird dann die Bildkorrelation durchgeführt und anschließend, in einem Schritt S3, die 3D-Punktwolke ermittelt. In einem Schritt S4 wird dann in der Auswerteeinrichtung 3 abgefragt, ob ein 3D-Oberflächenmodell zu erstellen ist. Falls das Oberflächenmodell zu erstellen ist, wird in Schritten S52 und S53 das 3D-Oberflächenmodell ermittelt und die Merkmalsextraktion aus dem 3D-Oberflächenmodell im 3D-Objektraum durchgeführt. Ergibt die Abfrage im Schritt S4, dass kein Oberflächenmodell zu erstellen ist, wird in einem Schritt S51 die Merkmalsextraktion aus der 3D-Punktwolke im 3D-Objektraum durchgeführt. Nach der Merkmalsextraktion erfolgt nach dem Schritt S53 bzw. S51 in einem weiteren Schritt S6 die Bestimmung der Radebene und daraus in einem Schritt S7 die Bestimmung der Radstellungswinkel, d.h. des Winkels zwischen der jeweiligen Radebene und den Fahrzeug-Referenzebenen.

Bei der in Fig. 6B dargestellten Vorgehensweise sind gegenüber dem in Fig. 6A dargestellten Prozess nach der Ermittlung der 3D-Punktwolke in dem Schritt S3 als zusätzliche Schritte S31 und S32 eine Bestimmung der signifikanten Radmerkmale und eine Definierung der Charakteristik der Radmerkmale (Punkt, 2D-Funktion, 3D-Funktion/-Fläche) angegeben. Das signifikante Radmerkmal stellt ein eindeutig erkennbares Merkmal, beispielsweise das Ventil V dar, anhand dessen dann die übrigen Radmerkmale in ihrer Lage eindeutig festgelegt sind. Die Charakteristik der Radmerkmale kann zur optimalen Erkennung und Auswertung geeignet definiert werden.

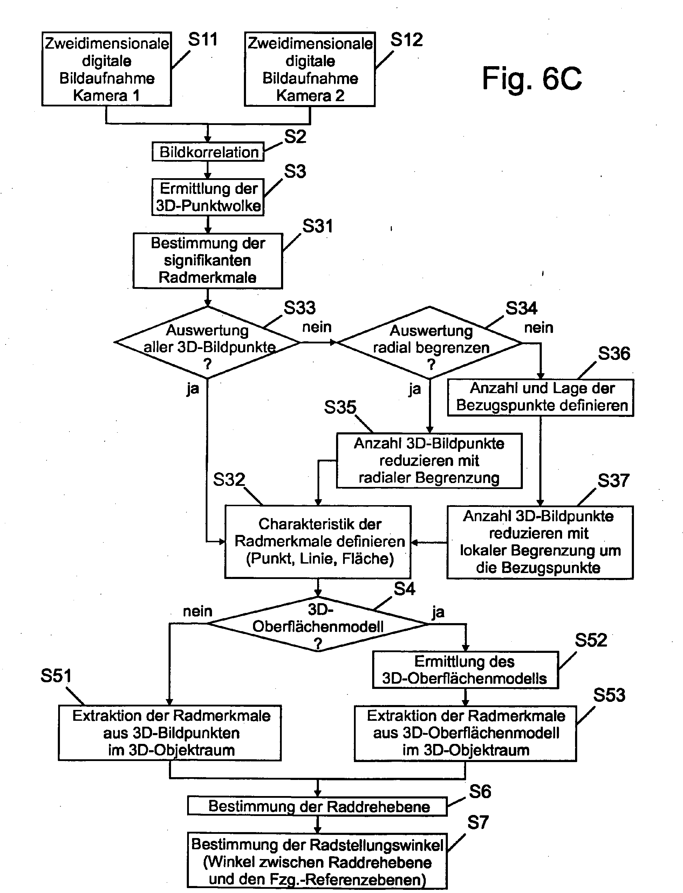

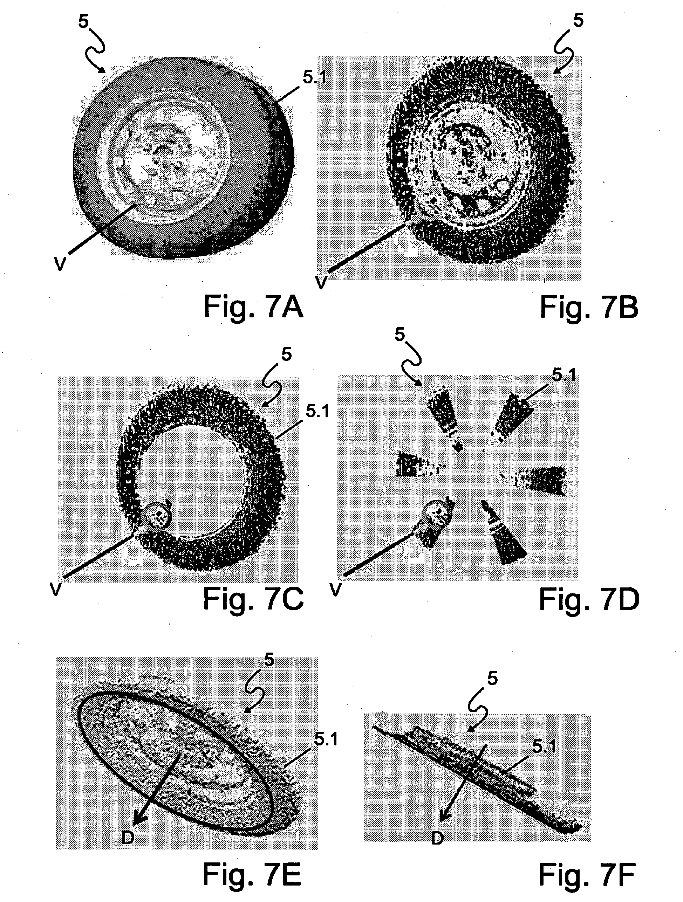

Eine weitere Ausgestaltung des Prozesses ist in Fig. 6C gezeigt. Hierbei ist gegenüber dem in Fig. 6B dargestellten Ablauf nach dem Schritt S31 ein Schritt S33 vorgesehen, in dem eine Abfrage erfolgt, ob alle 3D-Bildpunkte ausgewertet werden sollen. Falls alle 3D-Bildpunkte ausgewertet werden sollen, wird zu dem Schritt S32 übergegangen, in dem die Charakteristik der Radmerkmale entsprechend Fig. 6B definiert wird. Sollen nicht alle 3D-Bildpunkte ausgewertet werden, erfolgt in einem Schritt S34 eine weitere Abfrage, ob die Auswertung radial begrenzt werden soll. Falls eine radiale Begrenzung vorgenommen werden soll, wird die Anzahl der 3D-Bildpunkte radial begrenzt und damit reduziert. Anschließend wird zum Schritt S32 übergegangen. Soll keine Auswertung mit radialer Begrenzung vorgenommen werden, wird in einem Schritt S36 die Anzahl und Lage der Bezugspunkte BP definiert und anschließend in einem Schritt S37 die Anzahl der 3D-Bildpunkte reduziert mit lokaler Begrenzung um die Bezugspunkte BP und sodann zum Schritt S32 übergegangen, wonach die in Fig. 6B bzw. 6A dargestellte weitere Abfolge abläuft. Die radiale Begrenzung zur Reduktion der Anzahl der 3D-Bildpunkte ist nur eine Möglichkeit, andere wären z.B. eine sektorweise Begrenzung (vgl. Fig. 7C und 7D) oder die genannte lokale Begrenzung um Bezugspunkte herum.

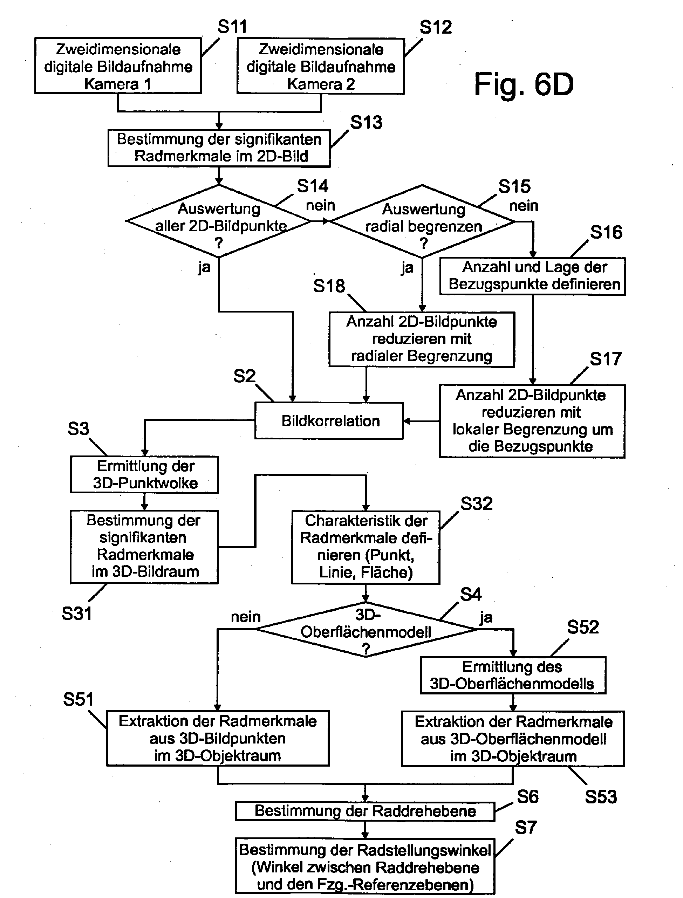

Alternativ kann, wie Fig. 6D zeigt, eine Vorverarbeitung mit Begrenzung der Anzahl der Bildpunkte bereits auf der Basis der 2D-Bilder erfolgen. Hierzu wird nach der Bildaufnahme durch die beiden Kameras 1 und 2 (Schritte S11, S12) zunächst eine Bestimmung der signifikanten Radmerkmale im 2D-Bild (Schritt S13) vorgenommen und anschließend wird in einem Schritt S14 abgefragt, ob eine Auswertung aller 2D-Bildpunkte erfolgen soll. Falls dies der Fall ist, wird zu dem Schritt S2 nach Fig. 6B übergegangen, wonach die weitere Schrittfolge entsprechend Fig. 6B ausgeführt wird. Sollen nicht alle 2D-Bildpunkte ausgewertet werden, wird in einem weiteren Schritt S15 abgefragt, ob eine radiale Begrenzung der Auswertung erfolgen soll. Falls dies der Fall ist, erfolgt eine radiale Begrenzung und damit Reduzierung der Anzahl der 2D-Bildpunkte in einem Schritt S18, wonach wiederum zur Bildkorrelation S2 und den nachfolgenden Schritten übergegangen wird. Soll keine radiale Begrenzung der Auswertung erfolgen, wird in einem Schritt S16 die Anzahl und Lage der Bezugspunkte definiert und anschließend in einem Schritt S17 die Anzahl der 2D-Bildpunkte mit lokaler Begrenzung um die Bezugspunkte reduziert, wonach dann zur Bildkorrelation S2 mit anschließender Schrittfolge übergegangen wird. Auch hierbei ist die Begrenzung der Auswertung in radialer Richtung als Beispiel zu sehen, eine andere Möglichkeit wäre eine sektorweise Begrenzung.

In den Fig. 7A bis 7F ist die Gewinnung von Radmerkmalen und die Ermittlung der Radebene E und der dazu senkrechten Raddrehachse D anhand einer bildhaften Wiedergabe dargestellt. Von dem in Fig. 7A dargestellten zweidimensionalen digitalen Bild eines Rades 5 mit Reifen 5.1 und Ventil V wird, wie in Fig. 7B dargestellt, eine 3D-Punktwolke des Rades 5 gewonnen, wobei auch das Ventil V ersichtlich ist. Aus der 3D-Punktwolke können dann die Radmerkmale extrahiert waden, wobei das Ventil V ein signifikantes, eindeutig erkennbares Radmerkmal darstellt. Bei den Fig. 7C und 7D sind die auszuwertenden Bereiche der 3D-Punktwolke radial bzw. sektorweise begrenzt, wobei nach Fig. 7C der mittlere Felgenbereich und in Fig. 7D einzelne Sektoren sowie ein nicht interessierender mittlerer Bereich, also Bereiche, von denen keine Radmerkmale gewonnen werden sollen, ausgenommen sind. Als signifikantes Merkmal ist weiterhin das Ventil V vorhanden. Die Fig. 7E und 7F zeigen die Bestimmung des Normalenvektors des Rades 5 bzw. der Richtung der Drehachse D des Rades und der dazu senkrechten Radebene E im dreidimensionalen Raum. Dazu werden hier beispielhaft Radmerkmale der äußeren Kontur der Seitenwand des Reifens herangezogen. Die Verwendung anderer gewonnener Radmerkmale ist aber ebenso möglich, auch die Kombination mehrerer unterschiedlicher Radmerkmale. Während in Fig. 7E die gewonnene Darstellung des Rades 5 schräg zur Zeichenebene gezeigt ist, ist nach Fig. 7 die Darstellung des Rades so gedreht, dass die Drehachse D in der Darstellungsebene und damit die Radebene E senkrecht zur Darstellungsebene liegt

Im Übrigen sind bei der Bestimmung der Rad- und/oder Achsgeometrie eines Kraftfahrzeuges, wie beispielsweise in den eingangs genannten Druckschriften angegeben, noch folgende Maßnahmen vorgesehen: vor der Messung am Fahrzeug werden die Bezugsebenen aus den erfassten Bezugsmerkmalen zur Referenzierung der Bilderfassungssysteme ermittelt. Während der Messung am Fahrzeug erfolgt eine Selbstkontrolle der Referenzierung des Messsystems anhand von nicht durch das Fahrzeug abgedeckten Bezugsmerkmalen. Die Radebene E wird aus den erfassten Radmerkmalen und den ermittelten Radstellungswinkeln aus der Relation der Radebene E zu den Bezugsebenen bestimmt. Vorteilhaft wird die Radebene E aus der Summe des mindestens einen erfassten Radmerkmals und des mindestens einen Karosseriemerkmals aus mehreren während der Vorbeifahrt erfassten Bildern ermittelt.

Reicht zur Sicherstellung einer hohen Messgenauigkeit die Auflösung der Kameras 2 nicht aus, kann die Auflösung dadurch gesteigert werden, dass geeignete, an sich bekannte Verfahren der Bildverarbeitung zur Auswertung im Sub-Pixel-Bereich einbezogen werden.

Zur Messung der Rad- und Achsgeometrie kann also die dreidimensionale Oberflächenstruktur des Rades 5 herangezogen werden, die anhand charakteristischer Bauteile des Rades wie Reifen, Felge, Radkappe oder Ventil ausgeprägt ist. Die Erfassung der Oberflächengeometrie erfolgt, wie oben beschrieben, anhand einer Bildverarbeitungsmethode mit Bildkorrelation, wobei eine 3D-Punktwolke aus dem mit minimal zwei Kameras aus unterschiedlicher Position aufgenommenen Objektausschnitt ermittelt wird, die eine dreidimensionale Oberfläche der im Objektausschnitt vorhandenen Objektstrukturen mit einer Vielzahl von 3D-Bildpunkten räumlich wiedergibt. Aus der 3D-Punktwolke kann ein 3D-Oberflächenmodell mit verschiedenen Verfahren beschrieben werden, beispielsweise mit einem Höhenlinienmodell, durch Dreiecksvermaschung oder mit einem regelmäßigen Gitternetz. Auf der Grundlage der 3D-Punktwolke und/oder mindestens eines der beispielhaft genannten dreidimensionalen Oberflächenmodelle können dann charakteristische Karosserie- und Radmerkmale bzw. auch die Bezugsmerkmale gewonnen werden.

Die Symmetrie eines Rades 5 und die Rotation jedes Radpunktes um die Drehachse des Rades erleichtern eine Ermittlung der relevanten Radebene E und/oder der Raddrehachse D, die zur Bestimmung von Spur und Sturz erforderlich sind. Signifikante Oberflächenmerhale am Rad wie Ventil, Lochbild, Beschriftung, aber auch weitere Merkmale wie Schmutz und Beschädigung lassen sich detektieren. Dadurch wird auch die Erfassung und Berücksichtigung eines evtl. Felgenschlages ermöglicht.

Erfolgt eine Messung in der Vorbeifahrt, wird zusätzlich die Bewegung der Karosserie relativ zur Messeinrichtung und zu den Bezugsmerkmalen bestimmt. Dazu wird die Ermittlung der 3D-Punktwolke bzw. des 3D-Oberflächenmodells auf die das Rad umgebende Karosserie (Radhaus) erweitert. Dies entspricht nur einer geringen Änderung des Vorgehens, da in der Regel ohnehin der gesamte Objektausschnitt zumindest zu Beginn der Messung dreidimensional erfasst wird, weil durch die verschiedenen Fahrzeugtypen und Felgengrößen das zu vermessende Rad 5 eine nicht von vornherein bekannte Position im Objektraum besitzt, sondern aus der 3D-Struk-tur der gesamten aufgenommenen Szene extrahiert werden muss.

## Patentansprüche

1. Verfahren zum Bestimmen der Rad und/oder Achsgeometrie von Kraftfahrzeugen mittels einer optischen Messeinrichtung, bei dem - gegebenenfalls unter Berücksichtigung von Bezugsmerkmalen und Karosseriemerkmalen - mit einer Bildaufnahmeanordnung, die mindestens zwei Bildaufnahmeeinrichtungen (2) zum Erzeugen digitaler Bilder umfasst, eine gegenseitige Zuordnung von mindestens zwei Aufnahmestandorten und Referenzierung zum Messraum vorgenommen sowie aus unterschiedlichen Perspektiven ein Objektausschnitt (6) mit dem zu vermessenden Rad (5) erfasst wird und bei der Messung die Lage von Radmerkmalen im drei-dimensionalen Messraum ausgewertet wird,
**dadurch gekennzeichnet,**
**dass** aus dem mit den mindestens zwei Bildaufnahmeeinrichtungen (2) aus den unterschiedlichen Perspektiven zweidimensional erfassten Objektausschnitt mit Methoden der Bildverarbeitung mittels Bildkorrelation im dreidimensionalen Objektraum eine 3D-Punktwolke ermittelt wird, die die dreidimensionale Oberfläche mit einer Vielzahl einzelner 3D-Bildpunkte wiedergibt und daraus die Radmerkmale und/oder Bezugsmerkmale und/oder Karosseriemerkmale als Punkt, 2D-Funktion, 3D-Funktion oder 3D-Fläche gewonnen werden.

2. Verfahren nach Anspruch 1,
**dadurch gekennzeichnet,**
**dass** entweder die Informationen der 3D-Punktwolke unmittelbar zur Extraktion der Rad merkmale verwendet werden oder über einen Zwischenschritt aus der 3D-Punktwolke zuerst ein Oberflächenmodell abgeleitet und in einem nachfolgenden zweiten Schritt dann aus dem Oberflächenmodell die Radmerkmale extrahiert werden.

3. Verfahren nach Anspruch 2,
**dadurch gekennzeichnet, dass** auf der Basis der 3D-Punktwolke ein dreidimensionales Oberflächenmodell als Höhenlinienmodell, als regelmäßiges Gitternetz oder durch Dreiecksvermaschung ermittelt wird.

4. Verfahren nach einem oder mehreren der vorhergehenden Ansprüche,
**dadurch gekennzeichnet, dass** zusätzlich zu den Radmerkmalen in entsprechender Weise mindestens ein markantes Karosseriemerkmal gewonnen wird.

5. Verfahren nach Anspruch 4,
**dadurch gekennzeichnet,**
**dass** die Bestimmung der Rad- und/oder Achsgeometrie in der Vorbeifahrt des Fahrzeuges an den Bildaufnahmeeinrichtungen (2) erfolgt, wobei die Bewegung des Fahrzeuges relativ zu den Bildaufnahmeeinrichtungen auf der Grundlage des mindestens einen Karosseriemerkmals bestimmt wird, und
**dass** mindestens ein Radmerkmal des zu vermessenden Rades (5) aus der Oberflächenstruktur des erfassten Objektausschnittes (6) zu mehreren oder allen Bildaufnahmezeitpunkten in der Vorbeifahrt extrahiert wird.

6. Verfahren nach einem der vorhergehenden Anspruch,
**dadurch gekennzeichnet,**
**dass** das zu vermessende Rad (5) anhand mindestens eines extrahierten signifikanten Radmerkmales und zusätzlich mindestens zwei weiteren Radmerkmalen in der Auswerteeinrichtung auf Felgenschlag überprüft und dieser gegebenenfalls bei der weiteren Auswertung berücksichtigt wird.

7. Verfahren nach einem der vorhergehenden Ansprüche,
**dadurch gekennzeichnet, dass** die gegenseitige Zuordnung der Aufnahmestandorte und die Referenzierung auf der Grundlage einer in den Messraum eingebrachten zusätzlichen Bezugsmerkmalsanordnung und/oder auf der Grundlage von Bezugsmerkmalen erfolgt, die aus in dem Messraum ohnehin vorhandenen markanten Strukturen mit den in den Ansprüche 1 bis 3 genannten Methoden gewonnen werden.

8. Verfahren nach einem der vorhergehenden Ansprüche,
**dadurch gekennzeichnet, dass** Muster auf das Rad (5), die Karosserie und/oder in den Messraum mittels mindestens eines Projektors projiziert werden.

9. Verfahren nach einem der vorhergehenden Ansprüche,
**dadurch gekennzeichnet, dass** in der 3D-Punktwolke und/oder im dreidimensionalen Oberflächenmodell vor der Extraktion der Rad- und/oder Karosseriemerkmale eine partiell unterschiedliche Dichte und/oder ein partiell unterschiedliches Raster erzeugt wird.

10. Verfahren nach einem der vorhergehenden Ansprüche,
**dadurch gekennzeichnet, dass** eine Reduzierung der bei der Auswertung berücksichtigten Daten dadurch vorgenommen wird, dass die Bildpunkte nicht interessierender, aufgenommener Bildbereiche entweder vor der Ermittlung der 3D-Punktwolke aus den 2D-Bildpunkten oder nach der Ermittlung der 3D-Punktwolke aus den 3D-Bildpunkten ausgenommen werden.

11. Verfahren nach einem der vorhergehenden Ansprüche,
**dadurch gekennzeichnet,**
**dass** der Bildverarbeitungseinrichtung Vorinformationen zum zu vermessenden Fahrzeug und/oder Rad, wie z.B. Reifendurchmesser und/oder Felgendurchmesser und/oder Felgenform zugeführt werden.

## Claims

1. Method for the determination of the wheel geometry and/or axle geometry of motor vehicles by means of an optical measuring device, in the case of which method - by taking into account, if appropriate, reference features and bodywork features - an image recording arrangement which comprise at least two image recording devices (2) for producing digital images is used to undertake a mutual assignment of at least two recording locations and to reference them relative to the measurement space, and an object section (6) with the wheel (5) to be measured is acquired from different perspectives, and the position of wheel features in the three-dimensional measurement space is evaluated during the measurement, **characterized in that** methods of image processing by means of image correlation in the three-dimensional object space are used to determine, from the object section acquired in two dimensions with the aid of the at least two image recording devices (2) from the different perspectives, a 3D point cloud which reproduces the three-dimensional surface with a multiplicity of individual 3D pixels, and the wheel features and/or reference features and/or bodywork features are obtained therefrom as a point, 2D function, 3D function or 3D surface.

2. Method according to Claim 1, **characterized in that** either the information of the 3D point cloud is used directly to extract the wheel features, or firstly a surface model is derived from the 3D point cloud via an intermediate step, and then the wheel features are extracted from the surface model in a following second step.

3. Method according to Claim 2, **characterized in that** a three-dimensional surface model is determined, on the basis of the 3D point cloud, as a contour line model, as a regular grid network or by triangular meshing.

4. Method according to one or more of the preceding claims, **characterized in that** in addition to the wheel features at least one salient bodywork feature is obtained in a corresponding way.

5. Method according to Claim 4, **characterized in that** the determination of the wheel geometry and/or axle geometry is performed as the vehicle is driving past the image recording devices (2), the movement of the vehicle relative to the image recording devices being determined on the basis of the at least one bodywork feature, and
**in that** at least one wheel feature of the wheel (5) to be measured is extracted from the surface structure of the acquired object section (6) at a number of, or all, image recording instants during the drive past.

6. Method according to one of the preceding claims, **characterized in that** the wheel (5) to be measured is checked in the evaluation device for rim impact with the aid of at least one extracted significant wheel feature and, in addition, at least two further wheel features, and said rim impact is taken into account, if appropriate, in the further evaluation.

7. Method according to one of the preceding claims, **characterized in that** the mutual assignment of the recording locations and the referencing are performed on the basis of an additional reference feature arrangement introduced into the measurement space and/or on the basis of reference features which are obtained using the methods named in Claims 1 to 3 from the salient structures present in any case in the measurement space.

8. Method according to one of the preceding claims, **characterized in that** patterns are projected onto the wheel (5), onto the body and/or into the measurement space by means of at least one projector.

9. Method according to one of the preceding claims, **characterized in that** a partially different density and/or a partially different raster are/is produced in the 3D point cloud and/or in the three-dimensional surface model before the extraction of the wheel features and/or bodywork features.

10. Method according to one of the preceding claims, **characterized in that** a reduction in the data taken into account during the evaluation is undertaken by extracting the pixels of recorded image areas of no interest either before the determination of the 3D point cloud from the 2D pixels, or after the determination of the 3D point cloud from the 3D pixels.

11. Method according to one of the preceding claims, **characterized in that** the image processing device is fed preliminary information relating to the vehicle and/or wheel to be measured, such as, for example, tyre diameter and/or rim diameter and/or rim shape.

## Revendications

1. Procédé pour déterminer la géométrie de roue et/ou d'essieu de véhicules automobiles à l'aide d'une installation de mesure optique, selon lequel, le cas échéant, en tenant compte de caractéristiques de référence et de caractéristiques de carrosserie, à l'aide d'un dispositif de prise de vues comprenant au moins deux installations de prise de vues (2) pour générer des images numériques, on effectue une association réciproque d'au moins deux emplacements de prise de vues et de référence pour l'espace de mesure ainsi qu'à partir de perspectives différentes, on saisit un détail d'objet (6) de la roue (5) à mesurer et en mesurant, on exploite la position des caractéristiques de roue dans l'espace de mesure tridimensionnel,
**caractérisé en ce qu'**
à partir de l'extrait d'objet saisi en deux dimensions suivant des perspectives différentes à l'aide d'au moins deux installations de prise de vues (2), on détermine en appliquant des procédés de traitement d'image par corrélation d'image dans l'espace objet, tridimensionnel, un nuage à trois points qui représente la surface tridimensionnelle avec un grand nombre de points image 3D distincts et on en déduit les caractéristiques de roue et/ou les caractéristiques de référence et/ou les caractéristique de carrosserie sous la forme de points, d'une fonction 2D, d'une fonction 3D ou d'une surface 3D.

2. Procédé selon la revendication 1,
**caractérisé en ce que**
soit on utilise les informations du nuage de points 3D directement après leur extraction des caractéristiques de roue ou par une étape intermédiaire en déduisant tout d'abord, à partir du nuage de points 3D, un modèle de surface et, dans une seconde étape suivante, on extrait ensuite les caractéristiques de roue du modèle de surface.

3. Procédé selon la revendication 2,
**caractérisé en ce que**
sur la base du nuage de points 3D, on détermine un modèle de surface comme modèle de ligne de niveau, comme réseau régulier ou par un maillage en triangles.

4. Procédé selon l'une ou plusieurs des revendications précédentes,
**caractérisé en ce qu'**
en plus des caractéristiques de roue, on détermine de manière appropriée au moins une caractéristique marquante de la carrosserie.

5. Procédé selon la revendication 4,
**caractérisé en ce qu'**
on détermine la géométrie de la roue et/ou de l'essieu au cours du passage du véhicule sur des installations de prise de vues (2), le mouvement du véhicule par rapport aux installations de prise de vues se déterminant en se fondant sur au moins une caractéristique de carrosserie et
on extrait au moins une caractéristique de roue pour la roue (5) à mesurer à partir de la structure de surface du détail d'objet (6) saisi vis-à-vis de plusieurs ou de tous les instants de prise de vues au cours du passage.

6. Procédé selon l'une des revendications précédentes,
**caractérisé en ce qu'**
à l'aide d'au moins une caractéristique de roue significative, extraite et en plus d'au moins deux autres caractéristiques de roue pour la roue (5) à mesurer, on effectue dans l'installation d'exploitation un choc sur la jante et, le cas échéant, on en tient compte pour la suite de l'exploitation.

7. Procédé selon l'une des revendications précédentes,
**caractérisé en ce que**
l'association réciproque des emplacements et le référencement sur le fondement d'une disposition de caractéristiques de référence, supplémentaire, introduite dans l'espace de mesure et/ou sur le fondement des caractéristiques de référence que l'on récupère à partir des structures marquantes existant de toute façon dans l'espace de mesure se fait à l'aide des procédés objet des revendications 1 à 3.

8. Procédé selon l'une des revendications précédentes,
**caractérisé en ce qu'**
on projette des motifs sur la roue (5), la carrosserie et/ou dans l'espace de mesure à l'aide d'au moins un projecteur.

9. Procédé selon l'une des revendications précédentes,
**caractérisé en ce que**
dans le nuage de points 3D et/ou dans le modèle de surface tridimensionnelle, avant l'extraction des caractéristiques de roue et/ou de carrosserie, on génère une densité partielle différente et/ou une trame partielle différente.

10. Procédé selon l'une des revendications précédentes,
**caractérisé en ce qu'**
on effectue une réduction des données prises en compte dans l'exploitation de façon que les points images de zone d'images prises qui ne sont pas intéressantes, soient enlevés avant de déterminer le nuage de points 3D dans les points images 2D ou soient enlevés des points images 3D une fois que l'on aura déterminé le nuage de points 3D.

11. Procédé selon l'une des revendications précédentes,
**caractérisé en ce que**
l'installation de traitement d'images reçoit des informations préalables concernant le véhicule à mesurer et/ou la roue à mesurer telles que par exemple le diamètre des pneumatiques et/ou le diamètre de jante et/ou la forme de jante.
